# FASCICULE DE BREVET EUROPEEN

(11) **EP 2 583 283 B1**
(45) Date de publication et mention de la délivrance du brevet: **01.10.2014**
(21) Numéro de dépôt: 11724631.4
(22) Date de dépôt: 09.06.2011
(51) Int. Cl.: B65D 81/18, G21C 3/62, G21F 9/28, C01G 43/01, C01G 56/00, G21F 9/30

(54) **CHAMBRE DE RÉACTION DE MATIÈRE EXOTHERMIQUE**
REAKTIONSKAMMER FÜR EXOTHERMISCHES MATERIAL
REACTION CHAMBER FOR EXOTHERMIC MATERIAL

(30) Priorité: 16.06.2010 FR 1054752
(43) Date de publication de la demande: 24.04.2013
(73) Titulaire: Commissariat à l'Énergie Atomique et aux Énergies Alternatives, 75015 Paris (FR)
(72) Inventeur: MAZAUDIER, Fabrice, F-04100 Manosque (FR)
(74) Mandataire: Esselin, Sophie
(86) Numéro de dépôt international: PCT/EP2011/059609
(87) Numéro de publication internationale: WO 2011/157628

(56) Documents cités:
- FR-A1- 2 752 234
- FR-A1- 2 768 550

## Description

Le domaine de l'invention est celui du génie des procédés et des dispositifs technologiques associés pour le contrôle des réactions d'oxydation de matières très réactives. Il concerne plus directement/principalement une chambre de réaction fonctionnalisée pour des matières réagissant de manière fortement exothermique en présence d'oxygène et nécessitant par la même une gestion du risque d'emballement thermique.

La maîtrise des réactions exothermiques d'oxydation de matériaux solides est un réel problème notamment dans le domaine du nucléaire en particulier au niveau des procédés d'oxydation des combustibles nucléaires plutonifères et/ou uranifères de formes carbures ou nitrures avant le stockage ou l'entreposage ou avant le retraitement par dissolution nitrique, ou encore la gestion des rebuts de fabrication dans le cycle d'élaboration de ces combustibles. Ces combustibles nucléaires non oxydes, carbures, nitrures ont tous une forte réactivité avec l'oxygène et sont potentiellement pyrophoriques. La transformation en oxyde peut supprimer certains risques chimiques.

Les combustibles carbures plutonifères (U,Pu)C présentent une très grande affinité pour l'oxygène qui peut affecter la stabilité du produit au cours des différentes opérations de fabrication et dont la réaction d'oxydation peut générer des emballements thermiques fortement exothermiques selon la réaction fortement exothermique (ΔrH ≈ - 1250 kJ/mol) ci-après :

MC + O₂ -> MO₂ + M₃O₈ + CO₂ avec M = U, Pu

La sûreté exigeant que l'on maîtrise la réaction dans toutes les situations.

Ces procédés d'oxydation peuvent concerner le plutonium métallique pur ou allié. Il a déjà été proposé dans la demande de brevet français FR 2752234, une nacelle permettant la maitrise de l'oxydation de formes métalliques plutonifères. Plus précisément cette nacelle de l'art antérieur est une nacelle multi-couches spécifique pour contenir le système réactif susceptible de rentrer en fusion. L'enceinte de confinement est constituée par au moins une feuille d'un premier matériau choisi parmi le tantale, le tungstène et leurs alliages, insérée entre au moins deux feuilles d'un second matériau résistant à l'air aux températures du procédé mis en jeu, le second matériau pouvant avantageusement être en acier inoxydable.

En cours de réaction d'oxydation, cette enceinte multi-couche s'oxyde très peu et en cas de fusion puis de coulée accidentelle de plutonium, et perçage de l'acier inoxydable, le tantale retient le plutonium, permettant de réaliser par la même une enceinte sécurisée.

Ce même type de problème peut être rencontré également dans des domaines tels que le domaine de la construction ou du bâtiment industriel, par exemple pour des toitures ou plafonds fonctionnalisés et potentiellement actifs pour des entrepôts ou des ateliers ou des armoires où l'on travaille ou stocke des matières chimiques ou combustibles très inflammable.

De manière générale dans la gestion des procédés, il est classiquement proposé de gérer de façon manuelle ou automatique l'éventuel emballement d'une réaction chimique associée à - ou conséquence - d'une forte surchauffe avec un ensemble de capteurs et de rétroactions. Cette gestion, pour efficace qu'elle soit, s'appuie d'abord sur un transfert d'information(s), depuis le réacteur dans lequel se trouve le système réactif vers le ou les capteurs concernés, puis vers le module de contrôle-commande, pour qu'en retour, une ou plusieurs actions attendues se produisent. Ce flux d'information(s) et sa gestion, pour la mise en oeuvre de l'action corrective, ne peuvent pas être instantanés. Ils reposent de plus sur le bon fonctionnement des capteurs et de l'ensemble des éléments de la chaîne d'informations. Enfin, ils impliquent une alimentation électrique, qui même si elle est avantageusement découplée de l'alimentation du procédé en fonctionnement nominal, se doit d'être fiable et disponible, à l'image du système prévu *a priori* pour une gestion indéfectible de la réactivité neutronique d'un coeur de réacteur nucléaire en cas d'emballement, à savoir les barres de contrôle et le système leur permettant de chuter très rapidement pour absorber les neutrons.

Le demandeur a considéré qu'il pouvait être pertinent d'ajouter aux systèmes classiques de gestion d'un procédé chimique, une possibilité d'intervention sur la réaction *in-situ*, directe et rapide, robuste par conception, sans intervention de capteurs complexes ou manufacturés ou encore de réseau informatique, et autonome, c'est à dire sans alimentation électrique.

C'est pourquoi, le demandeur propose pour cela, une chambre de réaction (contenant le réactif dont on cherche à maîtriser la réaction, par exemple l'oxydation et l'exothermicité) dont le rôle ne se limite à celui de réceptacle des produits à traiter. En température, un fonctionnement particulier est associé à cette nacelle qui permet de ralentir voire d'étouffer la réaction d'oxydation et réduire la température, tout en facilitant l'évacuation des calories, en cas d'emballement ou de surchauffe.

Le fonctionnement repose d'une part sur la nature particulière des matériaux constituant la chambre et sur un agencement des différents composants actifs présents dans ladite nacelle.

Plus précisément, la présente invention a pour objet une chambre de réaction de matière exothermique dont la structure même permet de gérer les phénomènes de forte exothermicité lors de la réaction d'oxydation notamment de carbure plutonifère ou uranifère et ce de manière robuste et autonome.

Plus précisément la présente invention a pour objet une chambre de réaction de matière exothermique caractérisée en ce qu'elle comporte une structure multi-niveaux comportant au moins :
- un réceptacle de ladite matière correspondant à un niveau inférieur ;
- un niveau médian comprenant une charge réactive contenant au moins un carbonate d'alcalino-terreux, de manière à absorber de la chaleur émise lors de la réaction d'oxydation de ladite matière, ledit carbonate d'alcalino-terreux se décomposant sous l'effet de la chaleur dans une contre-réaction endothermique ;
- un niveau supérieur comprenant un couvercle.

Selon une variante de l'invention, le carbonate d'alcalino-terreux est du CaCO₃.

Selon une variante de l'invention, la matière traitée dans ce procédé d'oxydation est un carbure de plutonium et/ou d'uranium.

Selon une variante de l'invention, la charge réactive comprend en outre plusieurs types de carbonates de manière à régler la gamme de température de la décomposition thermique de la charge réactive.

Selon une variante de l'invention, la charge réactive comporte en outre du carbone.

Selon une variante de l'invention, le réceptacle de la chambre est en matériau métallique réfractaire pouvant être de type Inox ou Inconel.

Selon une variante de l'invention, la chambre comporte une grille servant de support et de tamis à la charge réactive positionnée en contact de ladite grille, lors de la décomposition de ladite charge.

Selon une variante de l'invention, la charge réactive est un bloc monolithique positionné sur ladite grille.

Selon une variante de l'invention, la charge réactive est répartie en différents pavés positionnés sur ladite grille.

Selon une variante de l'invention, la charge réactive est répartie sous forme de granules de granulométrie supérieure aux dimensions des mailles de ladite grille.

Selon une variante de l'invention, la chambre comporte en outre une plaque intermédiaire chimiquement inerte et assurant une étanchéité entre la charge réactive et le niveau supérieur.

Selon une variante de l'invention, la plaque intermédiaire est en tungstène.

Selon une variante de l'invention, la chambre comprend en outre des moyens pour appliquer une pression isostatique sur la charge réactive.

Selon une variante de l'invention, les moyens pour appliquer une pression isostatique sur la charge réactive sont intégrés au niveau supérieur et réalisés sous forme de deux plaques entre lesquelles sont insérés des ressorts.

Selon une variante de l'invention, les moyens pour appliquer une pression isostatique sur la charge réactive comprennent une masse.

Selon une variante de l'invention, les niveaux médian et supérieur sont confondus, la chambre comportant deux volets supérieurs solidaires du réceptacle, et capable de fermer ladite chambre, lesdits volets contenant le carbonate d'alcalino-terreux.

L'invention sera mieux comprise et d'autres avantages apparaîtront à la lecture de la description qui va suivre donnée à titre non limitatif et grâce aux figures parmi lesquelles :
- la figure 1 illustre l'avancement de la contre-réaction endothermique de décomposition chimique de carbonates en fonction de la température en K ;
- la figure 2 illustre la représentation arrhénienne In k = f(1/T), relative à la dépendance en température de la cinétique de décomposition de carbonate ;
- les figures 3a et 3b illustrent un premier exemple de chambre de l'invention selon deux variantes proches ;
- la figure 4 illustre un second exemple de chambre selon l'invention.

Le principe physico-chimique de l'invention repose sur l'utilisation des effets d'une réaction chimique choisie dite « de sécurité » sur la réaction que l'on cherche à maitriser.

La réaction chimique choisie, ou « de sécurité », est la décomposition thermique de carbonates d'alcalino-terreux, comme par exemple le CaCO₃ (calcite, ou encore calcaire ou pierre-à-chaux) :

CaCO₃ -> CaO + CO₂

La décomposition du CaCO₃ a fait l'objet d'une littérature abondante. Il a notamment été décrit dans la littérature par exemple dans les articles : J of Thermal Analysis 5 (1973), 43-49 ; J of Materials Science 39 (2004), 5189-5193 ; Ceramica 54 (2008), 268-272 ; C.R. Chimie 7 (004) 559-568 ; J of Thermal Analysis 45 (1995), 303-310 ; Thermochimica Acta 388 (2002) 115-128], que la calcite ou carbonate de calcium CaCO₃ se décompose sous l'effet de la température en donnant naissance à deux espèces de natures physique et chimique différentes, l'oxyde de calcium CaO et le gaz carbonique CO₂.

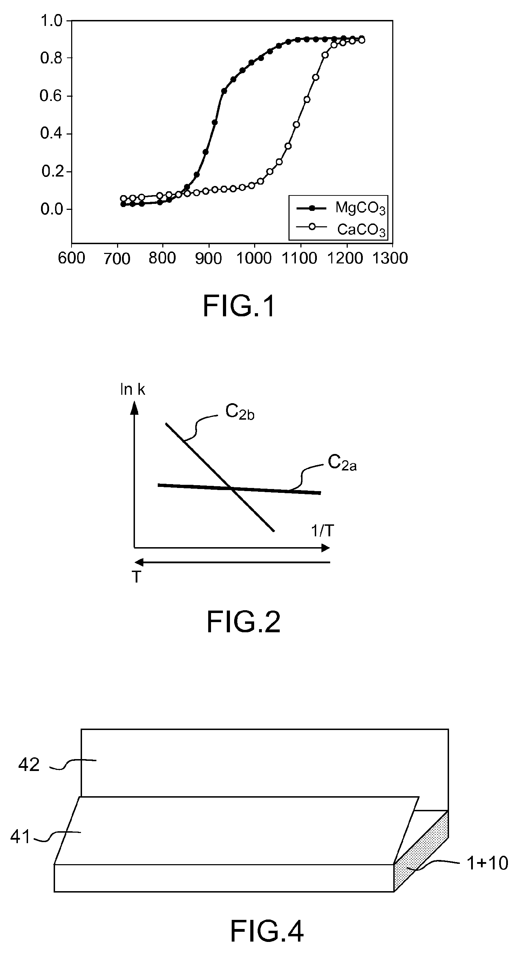

Le CaO est un solide réfractaire incombustible/ininflammable dont la température de fusion est de 2570°C. La réaction chimique est endothermique : elle consomme de l'énergie et nécessite de la chaleur pour se dérouler : ΔH = 200-233 kJ/mol. Pour le carbonate de calcium CaCO₃, elle se déroule à des températures comprises entre 400 et 1000°C typiquement, avec une nette augmentation (forme sigmoïde) de la cinétique de décomposition à partir de 700°C environ jusqu'à 950°C comme illustré en figure 1 et notamment décrit dans Ceramica 54 (2008), 268-272, qui est relative à la cinétique de la réaction en fonction de la température pour le CaCO₃ et le MgCO₃. L'énergie d'activation apparente Ea varie selon les auteurs et les conditions d'essai, entre 170 et 200 kJ/mol.

C'est une réaction assez fortement thermiquement activée. Autrement dit, la température et son augmentation ont un fort effet activateur sur la vitesse de la réaction.

Le CaCO₃ a une émissivité très élevée ε = 0.96, dans le domaine de l'infra-rouge, rayonnement caractéristique des sources de chaleur. Cette émissivité est proche de celle du corps noir (idéal) qui est de 1. Cette propriété conditionne pour partie la capacité du produit à absorber efficacement la chaleur rayonnante d'une source externe pour voir sa température augmenter, et ainsi atteindre le seuil de la décomposition thermique.

Il est par ailleurs connu que la décomposition des carbonates est peu dépendante de la nature chimique du gaz, que ce soit de l'azote, un gaz inerte ou encore l'air. Seul le CO₂ en quantité importante (quelques dizaines de pourcents) a une influence forte du fait de son rôle direct dans la réaction chimique (la décomposition thermique du CaCO₃ est toutefois un équilibre à tendance plutôt irréversible).

Cette réaction de décomposition thermique est endothermique, elle consomme donc de l'énergie. Sa cinétique augmente fortement avec la température : elle est assez fortement thermiquement activée.

Elle consomme d'autant plus d'énergie par le déroulement de son processus que la température dans son environnement proche augmente.

Cette réaction endothermique de décomposition thermique du carbonate mis en forme de pavé dit de sécurité, siège au dessus du lit dans lequel se trouve la réaction chimique d'oxydation exothermique que l'on cherche à maîtriser en fonctionnement incidentel. La réaction endothermique absorbe une partie de l'énergie libérée par la réaction d'oxydation.

Elle produit en outre deux espèces dans deux états physiques différents : CaO (solide réfractaire dont la température de fusion est très élevée) et CO₂ (gaz). Le carbonate est disposé à un niveau supérieur à celui où a lieu la réaction d'oxydation. Un second effet technique se produit : le gaz CO₂ produit, participe à l'évacuation des calories, tandis que le solide CaO tombe sur le lit incandescent ce qui correspond à un troisième effet technique, le privant d'oxygène par étouffement, comme le ferait du sable jeté sur le feu. *De facto,* privée d'oxygène, la réaction d'oxydation s'arrête ou diminue fortement.

Des sels d'ajustement peuvent être ajoutés au pavé de CaCO₃, par exemple des halogénures (NaCl) ou carbonates d'alcalins (Na₂CO₃, K₂CO₃), à des teneurs comprises typiquement entre 1 et 20%, qui permettent d'affiner/ajuster la gamme de température de décomposition thermique du produit, à quelques dizaines de degrés Celsius près.

Cette gamme de température correspond précisément à celle visée pour les procédés de conversion oxyde des carbures mixtes d'uranium et de plutonium.

De manière générale, la cinétique de cette réaction endothermique est sous contrôle chimique (réaction interfaciale siégeant à la surface du pavé de CaCO₃ en cours de décomposition). A aire réactive constante, la loi de comportement (perte de masse associée au départ de CO₂) en régime isotherme est linéaire (pas de contrôle diffusionnel ou de diminution de la vitesse).

Dans certaines conditions, le transfert de chaleur vers l'interface peut devenir limitant si le CaO produit ne se désagrège pas. On a tout intérêt à assister/faciliter son évacuation, qui est en outre utile pour produire l'effet technique de l'étouffement/extinction du lit incandescent.

C'est pourquoi la présente invention propose dans certaines variantes de l'invention une structure de chambre optimisée permettant de générer un effet de charge au niveau du couvercle, via une masse ou des ressorts (comme il sera décrit plus en détails et ci-après dans des exemples de réalisation) et de favoriser l'évacuation du CaO pour tomber sur le lit incandescent (effet technique attendu).

Le demandeur a observé qu'une action mécanique facilite grandement l'évacuation du CaO alors que naturellement, une coquille ou squelette aux formes du massif initial de carbonate reste en place. Le solide de CaO est très friable et se désagrège très facilement.

L'assurance de voir le CaO évacué, assoit la démonstration du maintien du régime stationnaire linéaire par contrôle chimique interfacial et de la dynamique de la réaction endothermique qui se poursuit selon un régime soutenu et continu, directement proportionnel à la température et à la surface réactive. En particulier, on n'observe pas de ralentissement de la cinétique endothermique du fait de la diffusion.

La cohésion et la densité apparente du pavé de CaCO₃ doivent quand même être adaptées pour que sous l'effet de la chaleur le matériau se désagrège effectivement et progressivement. Si le matériau est trop dense (calcaire naturel, voire marbre), alors, la décomposition thermique s'effectue plus lentement sans désagrégation, et peut laisser un squelette poreux après le traitement. Si le matériau est trop peu dense au contraire, alors, il peut se désagréger trop rapidement ou de façon non souhaitable. Il convient préférentiellement de mettre en forme le CaCO₃ par compression isostatique ou uniaxiale, comme pour les céramiques nucléaires, avec des pressions classiquement de l'ordre de 100 à 600 MPa selon un cycle déterminé, qui dépend en particulier de la proportion de sels d'ajustement choisi.

La forme physique du CaCO₃ est en outre importante. Il faut l'adapter à la surface de lit incandescent que l'on cherche à protéger.

Il est bien connu que la vitesse d'un processus chimique thermiquement activé suit approximativement la loi d'Arrhénius :
k(T) = A.exp (-Ea/RT) ou A est un facteur pré-exponentiel dit facteur de fréquence et k(T) est la constante cinétique de la réaction renseignant sur sa vitesse.

L'énergie d'activation apparente de l'oxydation des carbures (U,Pu)C est, comparativement beaucoup plus faible, puisque comprise entre 10 et 30 kJ/mol selon les résultats de travaux effectués par la demanderesse.

En représentation arrhénienne In k = f(1/T), il est aisé de déduire qu'une augmentation de température de la réaction d'oxydation n'a pas d'effet fort sur la cinétique d'oxydation (démonstration expérimentale de la faible propension à l'emballement) et, proportionnellement, a un fort effet endothermique par activation de la décomposition comme illustré en figure 2.

La courbe C₂ₐ est relative à la réaction exothermique dans le cas de l'oxydation des (U,Pu)C faiblement activé et la courbe C_{2b} est relative à la réaction endothermique dite de « sécurité » fortement thermiquement activée.

Il peut être avantageux de prévoir d'associer dans le matériau CaCO₃, en plus des sels d'ajustement, du charbon actif, dont la température d'oxydation (légèrement exothermique), peut être adaptée par un traitement *ad hoc.*

L'avantage d'utiliser le carbone pulvérulent, est de consommer l'oxygène en lieu et place du carbure plutonifère. L'effet technique d'extinction/étouffement par consommation d'oxygène est alors augmenté.

La conductivité thermique du pavé de CaCO₃ est par ailleurs augmentée, ce qui fait que le transfert thermique en son sein est facilité, et ainsi la génération in-situ de CO₂ concourant à la désagrégation du pavé par expansion volumique des gaz produits.

### Premier exemple de réalisation d'une chambre de réaction selon l'invention :

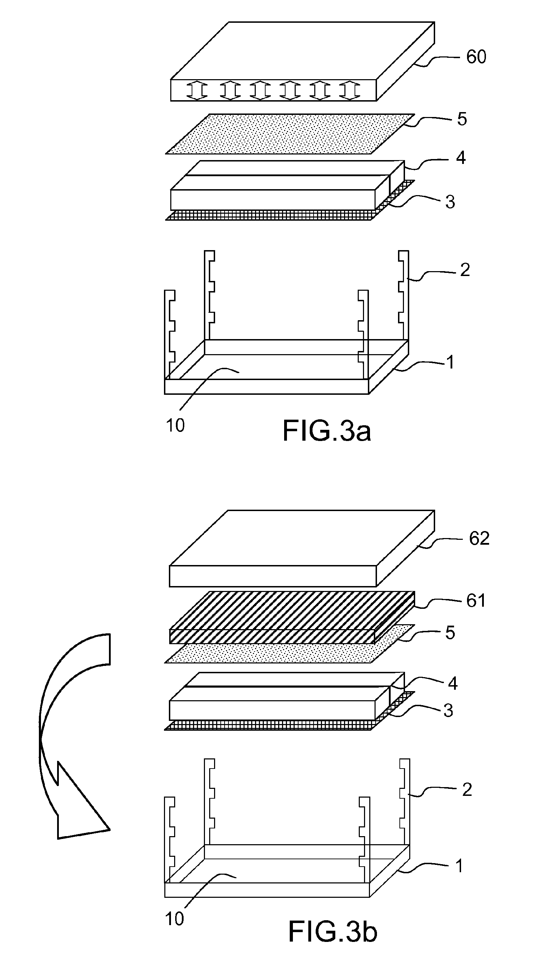

Les figures 3a et 3b illustrent un premier exemple de chambre de réaction de chargement fonctionnalisée selon l'invention, comportant un réceptacle 1 dans lequel est positionnée la matière réactive 10 de type carbure de plutonium et ou d'uranium, destinée à être oxydée. Ce réceptacle est équipé de montants 2 permettant d'ajuster à des niveaux supérieurs.

La chambre a deux niveaux dont un de hauteur ajustable. Le niveau médian comprend du CaCO₃ (réaction de sécurité).

La partie supérieure est placée au dessus du lit de la chambre de réaction, surélevée par le biais des pieds 2 comportant des créneaux.

La chambre de réaction est en inconel, ou un autre matériau métallique suffisamment réfractaire pour résister à la température du procédé d'oxydation des carbures plutonifères (entre 500 et 700°C typiquement) et bon conducteur de la chaleur pour dissiper les calories vers les parois et conduire la chaleur vers le carbonate.

L'environnement tout métallique du pavé de carbonate lui permet de chauffer indirectement par la bonne conductivité des éléments environnants et leur charge thermique, tandis que le rayonnement le chauffe directement puisque qu'il regarde directement la réaction exothermique.

Avantageusement la chambre de réaction comprend le matériau CaCO₃ ou un mélange de CaCO₃ et de sels dits d'ajustement comportant typiquement d'autres carbonates, permettant d'ajuster la température de décomposition de l'ensemble et de régler les paramètres de réaction endothermique. Il peut également être intéressant de mélanger au carbonate ou à l'ensemble de carbonates, du carbone en raison de ses très bonnes propriétés de conductivité thermique, assurant à l'ensemble une meilleure répartition de la chaleur dans le pavé de CaCO₃.

Une grille 3 est prévue pour supporter le pavé monolithique 4 de carbonate ou différents pavés unitaires, voire encore des carbonates sous forme divisée de type granules. En effet, selon la rapidité de réaction que l'on recherche, il peut être plus ou moins opportun d'utiliser des matières sous forme divisée ou massive. Dans le cas de granules, le maillage de la grille est adapté à la taille desdits granules de manière à pouvoir contenir ces derniers avant la décomposition.

L'ensemble est fermé par un couvercle 60. Ce couvercle peut être comme illustré en figure 3a, composé de deux plaques entre lesquelles est insérée une structure de ressorts, de manière à pouvoir venir appliquer une pression au niveau de la charge de CaCO₃. Il peut typiquement s'agir de deux plaques en Inox.

Selon une variante voisine illustrée en figure 3b, la structure de plaques et ressort peut être remplacée par une plaque massive 61 en matériau à forte densité comme le tungstène.

Une plaque intermédiaire 5 assurant une fonction de rempart « chimique » est insérée entre le couvercle et le niveau intermédiaire comportant la charge en CaCO₃, cette plaque pouvant typiquement être en matériau inerte de type Inox ou Inconel.

Ainsi, le couvercle a une fonction d'assistance à la désagrégation. Par le biais d'une charge ou d'une contrainte exercée par des ressorts, la plaque met le pavé de sécurité sous pression, de sorte que lorsque le seuil de la décomposition thermique est atteint, avec baisse concomitante des propriétés mécaniques du pavé (qui se transforme en CaO, en rupture cristallographique, et nativement peu dense), il passe de force à travers la grille pour recouvrir le lit incandescent en pluie.

Quand le pavé est complètement décomposé, la grille supporte alors directement le couvercle.

Ainsi selon cet exemple de réalisation, la présente invention propose deux conceptions :
- une forme parallélépipédique particulière ou tout autre assemblage reposant sur la plaque, fait d'un matériau très dense, un métal à forte densité typiquement, par exemple du tungstène, cette partie dense venant appuyer sur une plaque en contact avec le pavé de CaCO₃ ;
- un dispositif à ressorts, permettant d'exercer la même action.

La plaque peut être de surface plus ou moins marquée (stries par exemple) pour exercer un champ de contrainte discret (ici par opposition à continu) sur le pavé et favoriser sa désagrégation par concentration de contrainte.

### Deuxième exemple de réalisation d'une chambre de réaction selon l'invention :

La chambre de réaction comporte comme illustré en figure 4, une partie réceptacle 1 chargée en matière réactive 10, fermée par deux volets 41 et 42 comportant le matériau CaCO₃.

## Revendications

1. Chambre de réaction de matière exothermique (10), **caractérisée en ce qu'**elle comporte une structure multi-niveaux comportant au moins:
- un réceptacle (1) de ladite matière correspondant à un niveau inférieur ;
- un niveau médian comprenant une charge réactive (4) contenant au moins un carbonate d'alcalino-terreux, de manière à absorber de la chaleur émise lors de la réaction d'oxydation de ladite matière, ledit carbonate d'alcalino-terreux se décomposant sous l'effet de la chaleur dans une réaction endothermique ;
- un niveau supérieur comprenant un couvercle.

2. Chambre de réaction de matière exothermique (10) selon la revendication 1, **caractérisée en ce que** le carbonate d'alcalino-terreux est du CaCO₃.

3. Chambre de réaction de matière exothermique (10) selon l'une des revendications 1 ou 2, **caractérisée en ce que** la matière stockée est un carbure de plutonium et/ou d'uranium.

4. Chambre de réaction de matière exothermique (10) selon l'une des revendications 2 ou 3, **caractérisée en ce que** la charge réactive (4) comprend en outre plusieurs types de carbonates de manière à régler la gamme de température de la décomposition thermique de la charge réactive.

5. Chambre de réaction de matière exothermique (10) selon l'une des revendications 1 à 4, **caractérisée en ce que** la charge réactive (4) comporte en outre du carbone.

6. Chambre de réaction de matière exothermique (10) selon l'une des revendications 1 à 5, **caractérisée en ce que** le réceptacle (1) de la chambre est en matériau métallique réfractaire pouvant être de type Inox ou Inconel.

7. Chambre de réaction de matière exothermique (10) selon l'une des revendications 1 à 6, **caractérisée en ce qu'**elle comporte une grille (3) servant de support et de tamis à la charge réactive (4) positionnée en contact de ladite grille, lors de la décomposition de ladite charge.

8. Chambre de réaction de matière exothermique (10) selon la revendication 7, **caractérisée en ce que** la charge réactive (4) est un bloc monolithique positionné sur ladite grille.

9. Chambre de réaction de matière exothermique (10) selon la revendication 7, **caractérisée en ce que** la charge réactive (4) est répartie en différents pavés positionnés sur ladite grille.

10. Chambre de réaction de matière exothermique (10) selon la revendication 7, **caractérisée en ce que** la charge réactive (4) est répartie sous forme de granules de granulométrie supérieure aux dimensions des mailles de ladite grille.

11. Chambre de réaction de matière exothermique (10) selon l'une des revendications 1 à 10, **caractérisée en ce qu'**elle comporte en outre une plaque intermédiaire (5) chimiquement inerte et assurant une étanchéité entre la charge réactive (4) et le niveau supérieur.

12. Chambre de réaction de matière exothermique (10) selon la revendication 11, **caractérisé en ce que** la plaque intermédiaire (5) est en tungstène.

13. Chambre de réaction de matière exothermique (10) selon l'une des revendications 1 à 12, **caractérisée en ce qu'**elle comprend en outre des moyens pour appliquer une pression isostatique sur la charge réactive (4).

14. Chambre de réaction de matière exothermique (10) selon la revendication 13, **caractérisé en ce que** les moyens pour appliquer une pression isostatique sur la charge réactive (4) sont intégrés au niveau supérieur et réalisés sous forme de deux plaques entre lesquelles sont insérés des ressorts.

15. Chambre de réaction de matière exothermique (10) selon la revendication 13, **caractérisé en ce que** les moyens pour appliquer une pression isostatique sur la charge réactive (4) comprennent une masse (61).

16. Chambre de réaction de matière exothermique (10) selon l'une des revendications 1 à 12, **caractérisée en ce que** les niveaux médian et supérieur sont confondus, la chambre comportant deux volets supérieurs solidaires (41,42) du réceptacle, et capable de fermer ladite chambre, lesdits volets contenant le carbonate d'alcalino-terreux.

## Patentansprüche

1. Reaktionskammer für exothermes Material (10), **dadurch gekennzeichnet, dass** sie eine Mehrebenenstruktur aufweist, die wenigstens Folgendes umfasst:
- eine Aufnahme (1) für das Material, die einer unteren Ebene entspricht;
- eine mittlere Ebene, die eine reaktive Last (4) umfasst, die wenigstens ein Erdalkalicarbonat enthält, um während der Oxidationsreaktion des Materials emittierte Hitze zu absorbieren, wobei sich das Erdalkalicarbonat unter der Wirkung der Hitze in einer endothermen Reaktion zersetzt;
- eine obere Ebene, die eine Abdeckung umfasst.

2. Reaktionskammer für exothermes Material (10) nach Anspruch 1, **dadurch gekennzeichnet, dass** das Erdalkalicarbonat CaCO₃ ist.

3. Reaktionskammer für exothermes Material (10) nach Anspruch 1 oder 2, **dadurch gekennzeichnet, dass** das gespeicherte Material Plutonium- und/oder Urancarbid ist.

4. Reaktionskammer für exothermes Material (10) nach Anspruch 2 oder 3, **dadurch gekennzeichnet, dass** die reaktive Last (4) ferner mehrere Carbonattypen umfasst, um den Temperaturbereich der thermischen Zersetzung der reaktiven Last zu regeln.

5. Reaktionskammer für exothermes Material (10) nach einem der Ansprüche 1 bis 4, **dadurch gekennzeichnet, dass** die reaktive Last (4) ferner Kohlenstoff umfasst.

6. Reaktionskammer für exothermes Material (10) nach einem der Ansprüche 1 bis 5, **dadurch gekennzeichnet, dass** die Aufnahme (1) der Kammer aus hitzebeständigem metallischem Material besteht, das vom Edelstahl- oder Inconel-Typ sein kann.

7. Reaktionskammer für exothermes Material (10) nach einem der Ansprüche 1 bis 6, **dadurch gekennzeichnet, dass** es ein Gitter (3) umfasst, das bei der Zersetzung der Last als Träger und Sieb für die in Kontakt mit dem Gitter positionierte reaktive Last (4) dient.

8. Reaktionskammer für exothermes Material (10) nach Anspruch 7, **dadurch gekennzeichnet, dass** die reaktive Last (4) ein auf dem Gitter positionierter monolithischer Block ist.

9. Reaktionskammer für exothermes Material (10) nach Anspruch 7, **dadurch gekennzeichnet, dass** die reaktive Last (4) über verschiedene auf dem Gitter positionierte Blöcke verteilt ist.

10. Reaktionskammer für exothermes Material (10) nach Anspruch 7, **dadurch gekennzeichnet, dass** die reaktive Last (4) in Form von Körnern mit einer Granulometrie verteilt ist, die größer ist als die Abmessungen der Maschen des Gitters.

11. Reaktionskammer für exothermes Material (10) nach einem der Ansprüche 1 bis 10, **dadurch gekennzeichnet, dass** sie ferner eine chemisch inerte Zwischenplatte (5) umfasst, die eine Dichtung zwischen der reaktiven Last (4) und der oberen Ebene bildet.

12. Reaktionskammer für exothermes Material (10) nach Anspruch 11, **dadurch gekennzeichnet, dass** die Zwischenplatte (5) aus Wolfram besteht.

13. Reaktionskammer für exothermes Material (10) nach einem der Ansprüche 1 bis 12, **dadurch gekennzeichnet, dass** sie ferner Mittel zum Aufbringen eines isostatischen Drucks auf die reaktive Last (4) umfasst.

14. Reaktionskammer für exothermes Material (10) nach Anspruch 13, **dadurch gekennzeichnet, dass** die Mittel zum Aufbringen eines isostatischen Drucks auf die reaktive Last (4) auf der oberen Ebene integriert und in Form von zwei Platten realisiert sind, zwischen denen Federn eingefügt sind.

15. Reaktionskammer für exothermes Material (10) nach Anspruch 13, **dadurch gekennzeichnet, dass** die Mittel zum Aufbringen eines isostatischen Drucks auf die reaktive Last (4) eine Masse (61) beinhalten.

16. Reaktionskammer für exothermes Material (10) nach einem der Ansprüche 1 bis 12, **dadurch gekennzeichnet, dass** die mittlere und die obere Ebene miteinander übereinstimmen, wobei die Kammer zwei obere Klappen (41, 42) umfasst, die fest mit der Aufnahme verbunden und so ausgelegt sind, dass sie die Kammer verschließen, wobei die Klappen das Erdalkalicarbonat enthalten.

## Claims

1. A reaction chamber for exothermic material (10), **characterised in that** it comprises a multi-level structure comprising at least:
- a receptacle (1) for said material, corresponding to a lower level;
- a middle level comprising a reactive load (4) containing at least one alkaline-earth carbonate so as to absorb heat emitted during the oxidation reaction of said material, said alkaline-earth carbonate decomposing under the effect of the heat in an endothermic reaction;
- an upper level comprising a cover.

2. The reaction chamber for exothermic material (10) according to claim 1, **characterised in that** said alkaline-earth carbonate is CaCO₃.

3. The reaction chamber for exothermic material (10) according to claim 1 or 2, **characterised in that** the stored material is a plutonium and/or uranium carbide.

4. The reaction chamber for exothermic material (10) according to claim 2 or 3, **characterised in that** said reactive load (4) further comprises a plurality of types of carbonate so as to control the temperature range of the thermal decomposition of the reactive load.

5. The reaction chamber for exothermic material (10) according to any one of claims 1 to 4, **characterised in that** said reactive load (4) further comprises carbon.

6. The reaction chamber for exothermic material (10) according to any one of claims 1 to 5, **characterised in that** said receptacle (1) of said chamber is made from heat-resistant metallic material that can be of the stainless steel or Inconel type.

7. The reaction chamber for exothermic material (10) according to any one of claims 1 to 6, **characterised in that** it comprises a grid (3) acting as a support and sieve for said reactive load (4), which is positioned in contact with said grid, during the decomposition of said load.

8. The reaction chamber for exothermic material (10) according to claim 7, **characterised in that** said reactive load (4) is a monolithic block positioned on said grid.

9. The reaction chamber for exothermic material (10) according to claim 7, **characterised in that** said reactive load (4) is distributed over different blocks positioned on said grid.

10. The reaction chamber for exothermic material (10) according to claim 7, **characterised in that** said reactive load (4) is distributed in the form of granules, the granulometry of which is greater than the dimensions of the meshes of said grid.

11. The reaction chamber for exothermic material (10) according to any one of claims 1 to 10, **characterised in that** it further comprises a chemically inert intermediate plate (5) providing a seal between said reactive load (4) and said upper level.

12. The reaction chamber for exothermic material (10) according to claim 11, **characterised in that** said intermediate plate (5) is made from tungsten.

13. The reaction chamber for exothermic material (10) according to any one of claims 1 to 12, **characterised in that** it further comprises means for applying isostatic pressure to said reactive load (4).

14. The reaction chamber for exothermic material (10) according to claim 13, **characterised in that** said means for applying isostatic pressure to said reactive load (4) are integrated on the upper level and produced in the form of two plates, between which springs are inserted.

15. The reaction chamber for exothermic material (10) according to claim 13, **characterised in that** said means for applying isostatic pressure to said reactive load (4) comprise a mass (61).

16. The reaction chamber for exothermic material (10) according to any one of claims 1 to 12, **characterised in that** said middle levels and upper levels coincide, with said chamber comprising two upper flaps (41, 42) rigidly connected to said receptacle and designed to close said chamber, said flaps containing the alkaline-earth carbonate.
